# EUROPEAN PATENT APPLICATION

(11) **EP 2 985 891 A2**
(43) Date of publication of application: **17.02.2016**
(21) Application number: 15180539.7
(22) Date of filing: 11.08.2015
(51) Int. Cl.: H02K 15/02

(54) **GENERATOR STATOR INSTALLATION**

(30) Priority: 11.08.2014 US 201414456660
(71) Applicant: Hamilton Sundstrand Corporation, Windsor Locks, CT 06096-1010 (US)
(72) Inventor: CHASE, Ryan, Janesville, WI 53546 (US)
(74) Representative: Hughes, Andrea Michelle

(57) **Abstract**

An electrical generator section includes a case 12, a screen ring 22, first and second stator sections 30, 32, and a rotor 38. The case has a plurality of circumferentially-spaced axial flow cooling air inlets 20, and first and second electrical connector ports 14, 16. The screen ring is broken by a circumferential gap, and is secured over the cooling air inlets. The first stator section is heat-fitted into the case in a location axially forward of the screen ring, while the second stator section is heat-fitted into the case in a location axially aft of the screen ring. The first stator section is connected to the first electrical port through the circumferential gap, and the second stator section is connected to the second electrical port. The rotor is disposed radially inward of the first and second stator sections.

## Description

### BACKGROUND

The present invention relates generally to electrical generators, and more specifically to methods for installing stators and other components of a radial air gap electrical generator, and related apparatus.

Radial air gap electrical generators represent the most common class of generators used for power generation today. In such systems, a rotor and stator are disposed coaxially, and the rotor is rotated by a driveshaft. Rotor magnets (e.g. permanent magnets or electromagnets) thus accelerate past conductor coils of the stator (e.g. wound or printed coils), inducing alternating currents across a radial air gap under Faraday's law. Many generators produce multiple phases of electrical power; three-phase power is particularly common.

Electrical generators often have multiple stages. Two-stage systems typically have a permanent magnet rotor exciter stage that feeds a wound rotor main generator stage. Generators with three or more distinct stages are used for some applications. Compact electrical generators are used in many aircraft ram air turbines to generate electrical power during peak demand periods. Generators with multiple stages can be time consuming to assemble.

### SUMMARY

In one aspect, an electrical generator section includes a case, a screen ring, first and second stator sections, and a rotor. The case has a plurality of circumferentially-spaced axial flow cooling air inlets, and first and second electrical connector ports. The screen ring is broken by a circumferential gap, and is secured over the cooling air inlets. The first stator section is heat-fitted into the case in a location axially forward of the screen ring, while the second stator section is heat-fitted into the case in a location axially aft of the screen ring. The first stator section is connected to the first electrical port through the circumferential gap, and the second stator section is connected to the second electrical port. The rotor is disposed radially inward of the first and second stator sections.

In another aspect, a method of assembly is presented for a stator section of an air-cooled electrical generator having at least first and second stator assemblies. The method comprises aligning a screen ring having a circumferential gap with air passages of a generator case, affixing the screen ring to the case, heating the case above an installation temperature sufficient to enable heat-fitted stator installation, installing the first stator assembly axially forward of the screen ring while the case is hot, connecting wiring of the first stator assembly through the circumferential gap and a first connector ports, installing the second stator assembly axially aft of the screen ring while the case is hot, such that the screen ring is situated between the first and second stator assemblies, and connecting wiring of the second stator assembly through a second connector ports.

### BRIEF DESCRIPTION OF THE DRAWINGS

FIG. 1 is a perspective view of an electrical generator.
FIG. 2 is a cross-sectional schematic view of a section of the electrical generator, taken along line 2-2 of FIG. 1.
FIG. 3 is a perspective view of a screen of the electrical generator of FIG. 1.
FIG. 4 is a flowchart illustrating a method of assembly of the section of FIG. 2.

While the above-identified drawing figures set forth one or more embodiments of the invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale.

### DETAILED DESCRIPTION

The present invention is directed to an air-cooled electrical generator with a screen ring to prevent debris ingestion through cooling air inlets. The screen ring has a circumferential gap positioned to facilitate stator assembly installation.

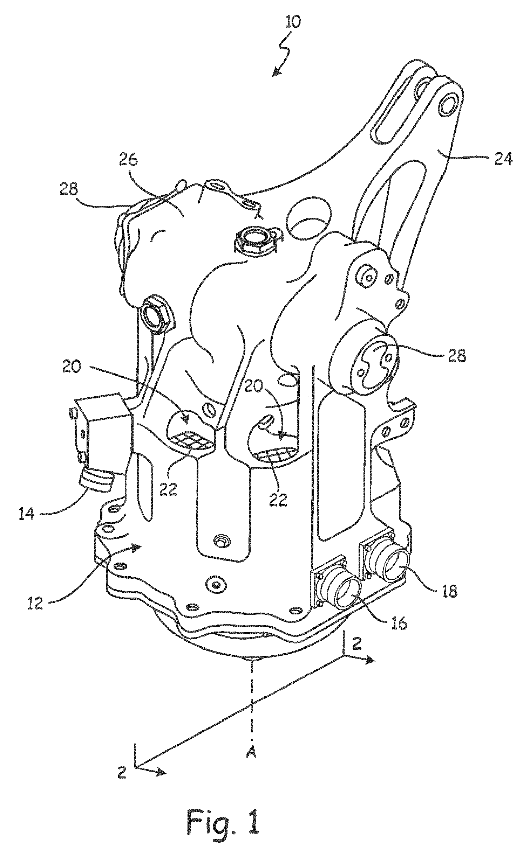

FIG. 1 is perspective view of one embodiment of electrical generator 10, a radial air gap electrical generator with multiple stages disposed about a common rotor along axis A. In some embodiments, electrical generator 10 can be a generator for an aircraft ram air turbine. Although the description hereinafter focuses on two stages of electrical generator 10, electrical generator 10 can have three or more stages.

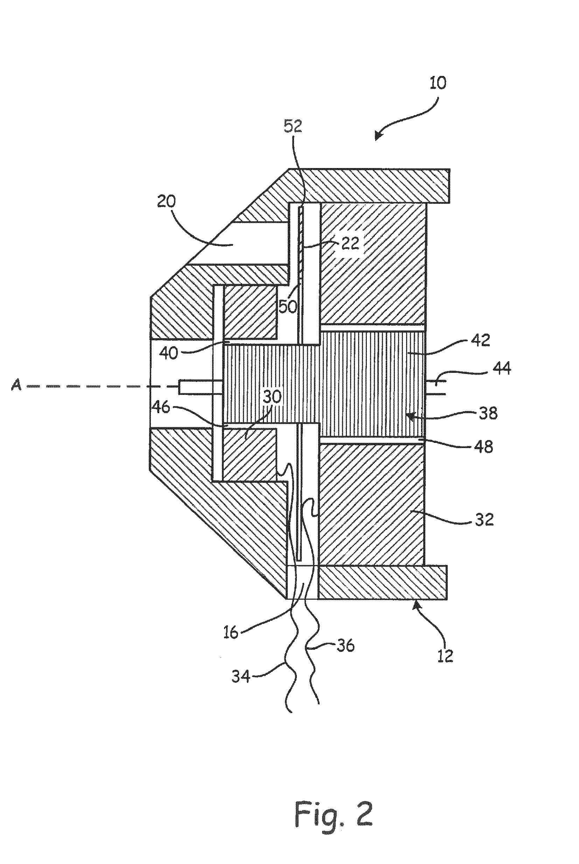

FIG. 1 illustrates electrical generator 10 with case 12, connector ports 14, 16, and 18, air inlets 20, screen ring 22, mounting flange 24, gearbox section 26, and gearbox attachment points 28. Case 12 is a rigid body that contains and supports other elements of electrical generator 10, including stator and rotor elements (described below, see FIG. 2). Connector ports 14, 16, and 18 are electrical connection locations for stator and/or rotor wiring for connection to external devices (e.g. power conditioning electronics). In the illustrated embodiment connector ports 14, 16, and 18 are hollow passages disposed to carry electrical wiring. In alternative embodiments, connector ports 14, 16, and 18 can be solid electrical connections.

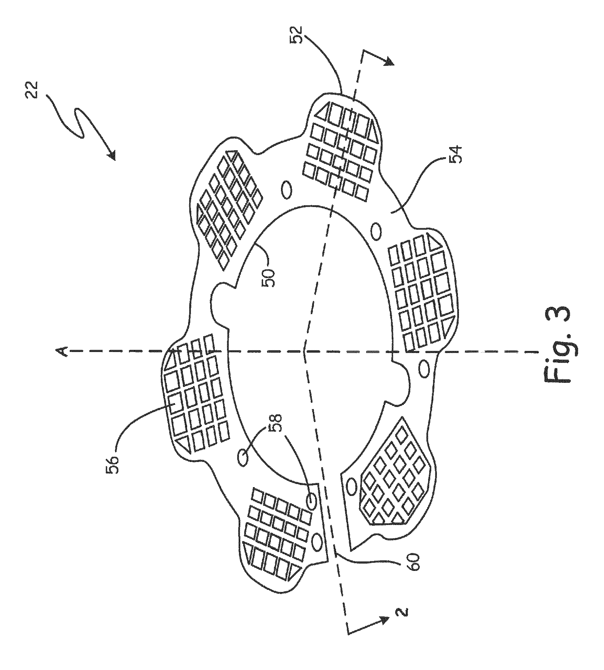

Air inlets 20 are circumferentially spaced-apart openings in case 12 oriented along axis A. Air inlets 20 facilitate cooling airflow through electrical generator 10, lowering operating temperatures. Screen ring 22 can be a meshed or grated cover discussed in further detail below with respect to FIGs. 2 and 3. Screen ring 22 covers air inlets 20, and protects against particulate ingestion into electrical generator 10 while leaving air inlets 20 open to airflow.

Mounting flange 24 is a mounting or attachment structure of case 12. In the depicted embodiment, mounting flange 24 provides a seat for a mounting trunnion that allows electrical generator 10 to pivot into position when an aircraft ram air turbine is deployed. Alternative embodiments can have any appropriate number of mounting flanges, brackets, or other fixtures to secure electrical generator 10 in a fixed or movable (e.g. deployable) position.

In the depicted embodiment, electrical generator 10 includes gearbox section 26, a case section with gearbox attachment points 28 that houses gearing for mechanical connection to the rotor (not shown; see FIG. 2) of electrical generator 10. Gearbox attachment points 28 are mechanically connection points (e.g. for secondary driveshafts, not shown) that connect to the rotor of electrical generator 10. Some embodiments of electrical generator 10 may have gearboxes situated in other positions, while others may have no gearbox section at all.

Electrical generator 10 has at least two stages of stator and rotor components disposed along axis A. Screen ring 22 is situated between these stator components, and has a circumferential gap to facilitate installation. (See FIGs, 2 and 3, discussed below).

FIG. 2 is a cross-sectional schematic view of a two-stage section of electrical generator 10 taken through section plane 2-2 of FIG. 1 and corresponding section line 2-2 of FIG. 3. Section 2-2 is not straight, but rather bends at axis A to better illustrate the interior of electrical generator 10. FIG. 2 illustrates case 12, air inlets 20, screen ring 22, first stator assembly 30, second stator assembly 32, first stator electrical wiring 34, second stator electrical wiring 36, rotor assembly 38 (with first rotor section 40 and second rotor Section 42), drive shaft 44, and air gaps 46 and 48. Screen ring 22 has inner ring diameter 50 an outer ring perimeter 52. FIG. 2 is a simplified view illustrating only a partial section of electrical generator 10 with first stator assembly 30 and second stator assembly 32. In some embodiments, electrical generator 10 may include one or more additional stator (and corresponding rotor) stages not shown here.

As discussed with respect to FIG. 1, case 12 is a rigid structural body that supports stator assemblies 30 and 32, and rotor assembly 38. In the illustrated embodiment, air inlets 20 are cooling air ports substantially parallel to axis A, and disposed at circumferentially spaced-apart locations radially outward of first stator assembly 30. Screen ring 22 is disposed immediately at the inner axial extent of air inlets 20, and axially abuts case 12. Screen ring 22 is situated axially between stator assemblies 30 and 32, and radially outward of first stator assembly 30.

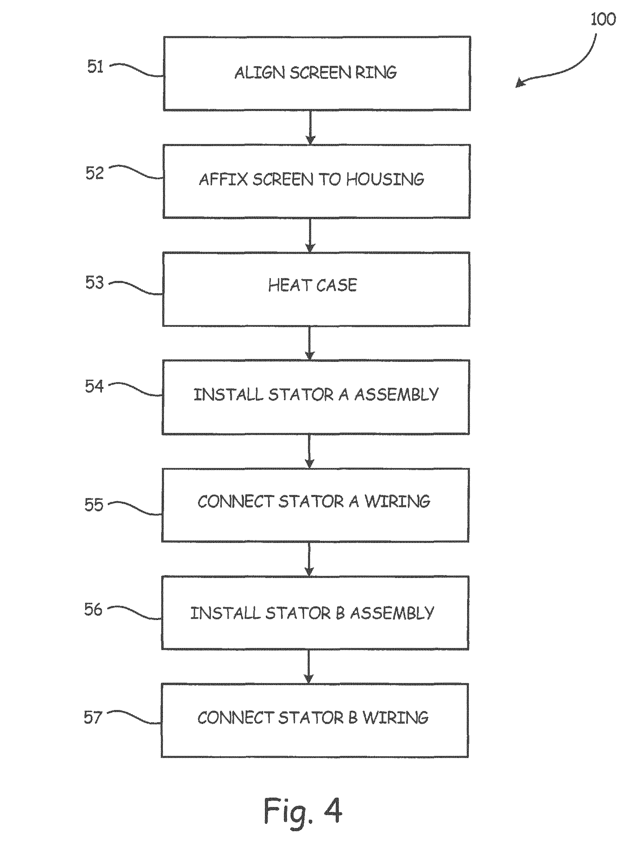

First stator assembly 30 and second stator assembly 32 are conductive "winding" assemblies across which rotor sections 40 and 42, respectively, induce voltages during generator operation. Stator assemblies 30 and 32 can, for example, be stator cores wound with coiled phases of conductive wire. Alternatively, conductor structures of stator assemblies 30 and/or 32 can be fabricated directly into stator cores, e.g. via additive manufacturing processes. Stator assemblies 30 and 32 are sized to be heat-fitted into case 12. During installation (described below with respect to FIG. 4) case 12 is heated to above an installation temperature, causing thermal expansion that allows stator assemblies 30 and 32 to be installed while case 12 is hot. Once stator assemblies 30 and 32 are in place, the cooling of case 12 locks stator assemblies 30 and 32 in place. In some embodiments, installation temperatures may be 177°C (350°F) or more.

First stator electrical wiring 34 and second stator electrical wiring 36 form electrical connections to other electrical components, e.g. power conditioning electronics or rotor elements of electrical generator 10. Electrical wiring 34 and 36 can, for example, carry a plurality of distinct phases of electrical output from stators assemblies 30 and 32, respectively. In some embodiments, electrical wiring 34 and/or 36 can mate with or pass through one or more of connector ports 14, 16, and/or 18 (see FIG. 1). In further embodiments, one or more of electrical wiring 34 and/or 36 can feed wound rotors of electrical generator 10, acting as an exciter stage or coil. First stator electrical wiring 34 passes through a circumferential gap (see FIG. 3, discussed below) in screen ring 22 during installation.

Rotor assembly 38 is a rotating magnetic assembly driven by drive shaft 44. Rotor assembly 38 includes first rotor section 40 radially opposite first stator assembly 30 across air gap 46, and second rotor section 42 radially opposite second stator assembly 32 across air gap 48. In the illustrated embodiment, first rotor and B sections 40 and 42 are disposed on a common rotor with no intervening gearing. In some alternative embodiments, separate coaxial rotor sections driven (e.g. via gearing or coaxial driveshafts) at different speeds. In one embodiment, first rotor section 40 is a permanent magnet rotor section with a plurality of circumferentially disposed permanent magnets. In some further embodiments, first stator assembly 30 can act as an exciter for wound rotors situated e.g. in second rotor section 42.

During installation, screen ring 22 is installed first, and stator assemblies 30 and 32 are installed subsequently. Screen ring 22 has inner ring diameter 50 and outer ring perimeter 52. Inner diameter 50 is situated radially inside of the innermost bound of air inlets 20, but radially outside of first stator assembly 30, such that first stator assembly 30 can be installed through inner diameter 50 of screen ring 22. Outer ring perimeter 52 of screen ring is situated radially outward of air inlets 20. A circumferential gap in screen ring 22 enables first stator wiring 34 to pass through screen ring 22 during installation, allowing first stator assembly 30 and second stator assembly 32 to both be installed in a single heating cycle of case 12.

FIG. 3 is an isometric view of screen ring 22 with inner ring diameter 50, outer ring perimeter 52, comprises ring body 54, screens 56, fastener holes 58, and circumferential gap 60. Ring body 54 can, for example, be a sheet metal body with inner diameter 40 and outer ring perimeter 52 as discussed above with respect to FIG. 2. Ring body 54 includes screens 56, fastener holes 58, and circumferential gap 60. As discussed above with respect to FIG. 2, inner ring diameter 50 is greater than an outer diameter of first stator assembly 30, allowing first stator assembly 30 to be installed through screen ring 22 (i.e. to pass axially through screen ring 22). In the illustrated embodiment, outer ring perimeter 52 of screen ring 22 is non-circular, having radial protrusions at circumferential locations of screens 56. This construction allows screen ring 22 to fit within an embodiment of case 12 with reduced case outer diameter between air inlet locations. In alternative embodiments, outer ring perimeter 52 may be a circular outer diameter, or may otherwise match an inner diameter shape of case 12.

Screens 56 are circumferentially spaced-apart mesh screens, gratings, or the like with apertures sized to obstruct debris ingestion into electrical generator 10 without significantly impeding airflow. In an installation position, each screen 56 aligns with a corresponding air inlet 20, and circumferential gap 60 aligns with first stator wiring 34. Circumferential gap 60 is a split in ring body 54 extending from inner ring diameter 50 to outer ring perimeter 52 in one location. When screen ring 22 is in a proper installation position, fastener holes 58 align with corresponding fastener locations in case 12 (not shown) disposed to receive pins, bolts, screws, or other fasteners.

FIG. 4 is a flowchart illustrating method 100. Method 100 is an assembly method for the two-stage section of electrical generator 10 illustrated in FIG. 2. First, screen ring 22 is aligned with case 22 such that fastener holes 58 match up with corresponding fastener holes in case 12, screens 56 are aligned with corresponding air inlets 20, and circumferential gap 60 is positioned at the circumferential position of first stator wiring 34. (Step S1). Next, screen ring 22 is affixed to case 12. (Step S2). In some embodiments, screen ring 22 may be affixed to case 12 solely by fasteners inserted through fastener holes 58. In other embodiments, adhesive may additionally or alternatively be used to secure screen ring 22 to case 12. In further embodiments, screen ring 22 can be a snap ring that engages with corresponding grooves in case 12.

Once screen ring 22 is installed on case 12, case 12 is heated to above an installation temperature (Tᵢₙₛₜₐₗₗ) selected for sufficient thermal expansion to ensure that first stator assembly 30 and second stator assembly 32 can be fitted into case 12. (Step S3). Once case 12 is heated, first stator assembly 30 is translated axially forward through screen ring 22, into case 12. (Step S4). Once first stator assembly 30 is in place, first stator wiring 34 is attached through circumferential slot 60 of screen ring 22, e.g. to electrical connection port 14, 16, or 18. (Step S5). Second stator assembly 30 is translated axially forward up to screen ring 22, into case 12, while case 12 is still hot. (Step S6). Elevated temperatures from step S3 remain above installation temperature Tᵢₙₛₜₐₗₗ through step S6, without need for cooling and/or re-heating between steps. Second stator wiring 36 is then attached, connecting second stator assembly 32 e.g. to electrical connection port 14, 16, or 18. In some embodiments, stator assemblies 30 and 32 can be held in installation positions entirely by the heat-fit provided by thermal contraction of case 12. In other embodiments, additional fasteners, adhesive, or attachment mechanisms can be used to ensure that stator assemblies 30 and 32 do not detach from case 12.

By allowing first stator assembly 30 and second stator assembly 32 to both be installed in a single heating cycle (i.e. without additional cooling and/or reheating steps), significant time and labor savings can be realized during generator assembly. This is made possible by circumferential gap 60 in screen ring 22, without which screen ring 22 could not be attached until after installation of first stator assembly 30, necessitating separate heating cycles to install first stator assembly 30 and second stator assembly 32.

### Discussion of Possible Embodiments

The following are non-exclusive descriptions of possible embodiments of the present invention.

A method of assembly for a stator section of an air-cooled electrical generator having at least first and second stator assemblies, the method comprising: aligning a screen ring having a circumferential gap with air passages of a generator case; affixing the screen ring to the case; heating the case above an installation temperature sufficient to enable heat-fitted stator installation; installing the first stator assembly axially forward of the screen ring, while the case is hot; connecting wiring of the first stator assembly through the circumferential gap and a first connector ports; installing the second stator assembly axially aft of the screen ring, such that the screen ring is situated between the first and second stator assemblies, while the case is hot; and connecting wiring of the second stator assembly through a second connector ports.

The method of the preceding paragraph can optionally include, additionally and/or alternatively, any one or more of the following features, configurations and/or additional components:

A further embodiment of the foregoing method, wherein the screen ring has a ring body with a plurality of circumferentially spaced screens, and wherein aligning the screen ring with air passages of the generator case comprises aligning the screens with the air passages.

A further embodiment of the foregoing method, wherein affixing the screen ring to the case comprises securing the screen ring to the case with a plurality of fasteners through fastener holes in the screen ring.

A further embodiment of the foregoing method, wherein affixing the screen ring to the case comprises securing the screen ring to the case with adhesive.

A further embodiment of the foregoing method, wherein installing the first stator assembly comprises passing the first stator assembly axially forward through a radially inner opening of the stator ring.

A further embodiment of the foregoing method, wherein the first and second connector ports are mounted on the case, and wherein aligning the screen ring comprises aligning the circumferential gap of the screen ring with the first connector port.

A further embodiment of the foregoing method, wherein the first and second stator assemblies are installed after heating the case, and before the case can cool below the installation temperature.

An electrical generator section comprising: a case with a plurality of circumferentially-spaced axial flow cooling air inlets and first and second electrical connector ports; a screen ring broken by a circumferential gap, and secured over the cooling air inlets; a first stator section heat-fitted into the case in a location axially forward of the screen ring, and connected to the first electrical port through the circumferential gap; a second stator section heat-fitted into the case in a location axially aft of the screen ring, and connected to the second electrical port; and a rotor disposed radially inward of the first and second stator sections.

The electrical generator section of the preceding paragraph can optionally include, additionally and/or alternatively, any one or more of the following features, configurations and/or additional components:

A further embodiment of the foregoing, wherein the circumferential gap of the screen ring is aligned with first electrical connector port of the case.

A further embodiment of the foregoing, wherein the rotor has first and second sections radially separated from first and second stators by first and second air gaps, respectively.

A further embodiment of the foregoing, wherein the first rotor section is a permanent magnet rotor section, and the second rotor section is a wound rotor section.

A further embodiment of the foregoing, wherein the screen ring is secured to the case via adhesive.

A further embodiment of the foregoing, wherein the screen ring has a screen ring with a plurality of circumferentially-spaced screens circumferentially aligned with the axial flow cooling air inlets of the case.

A further embodiment of the foregoing, wherein the screen ring as an inner diameter greater than an outer diameter of the first stator

A further embodiment of the foregoing, wherein the screen ring has a plurality of fastener holes, and is secured to the case via threaded fasteners passing through the fastener holes.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of assembly for a stator section of an air-cooled electrical generator having at least first and second stator assemblies, the method comprising:
aligning a screen ring (22) having a circumferential gap with air passages of a generator case (12);
affixing the screen ring to the case;
heating the case above an installation temperature sufficient to enable heat-fitted stator installation;
installing the first stator assembly (30) axially forward of the screen ring, while the case is hot;
passing wiring (34) of the first stator assembly through the circumferential gap and a first connector port (14);
installing the second stator assembly (32) axially aft of the screen ring, such that the screen ring is situated between the first and second stator assemblies, while the case is hot; and
passing wiring (36) of the second stator assembly through a second connector ports.

2. The method of claim 1, wherein the screen ring has a ring body (54) with a plurality of circumferentially spaced screens (56), and wherein aligning the screen ring with air passages of the generator case comprises aligning the screens with the air passages.

3. The method of claim 1, wherein affixing the screen ring to the case comprises securing the screen ring to the case with a plurality of fasteners through fastener holes in the screen ring.

4. The method of claim 1, wherein affixing the screen ring to the case comprises securing the screen ring to the case with adhesive.

5. The method of claim 1, wherein installing the first stator assembly comprises passing the first stator assembly axially forward through a radially inner opening of the stator ring.

6. The method of claim 1, wherein the first and second connector ports are mounted on the case, and wherein aligning the screen ring comprises aligning the circumferential gap of the screen ring with the first connector port.

7. The method of claim 1, wherein the first and second stator assemblies are installed after heating the case, and before the case can cool below the installation temperature.

8. An electrical generator section comprising:
a case (12) with a plurality of circumferentially-spaced axial flow cooling air inlets (20);
a screen ring (22) broken by a circumferential gap, and secured over the cooling air inlets;
a first stator section (30) heat-fitted into the case in a location axially forward of the screen ring, and having wiring (34) passing through the circumferential gap;
a second stator section (32) heat-fitted into the case in a location axially aft of the screen ring; and
a rotor (38) disposed radially inward of the first and second stator sections.

9. The electrical generator section of claim 8, wherein the circumferential gap of the screen ring is aligned with a first electrical connector port of the case.

10. The electrical generator section of claim 8, wherein the rotor has first and second sections (40, 42) radially separated from first and second stators by first and second air gaps, respectively.

11. The electrical generator section of claim 10, wherein the first rotor section is a permanent magnet rotor section, and the second rotor section is a wound rotor section.

12. The electrical generator section of claim 8, wherein the screen ring is secured to the case via adhesive.

13. The electrical generator section of claim 8, wherein the screen ring has a ring body (54) with a plurality of circumferentially-spaced screens (56) circumferentially aligned with the axial flow cooling air inlets of the case.

14. The electrical generator section of claim 8, wherein the screen ring has an inner diameter greater than an outer diameter of the first stator

15. The electrical generator section of claim 8, wherein the screen ring has a plurality of fastener holes (58), and is secured to the case via threaded fasteners passing through the fastener holes.
